# EUROPEAN PATENT APPLICATION

(11) **EP 4 309 785 A1**
(43) Date of publication of application: **24.01.2024**
(21) Application number: 22771008.4
(22) Date of filing: 18.02.2022
(51) Int. Cl.: B01J 23/63, B01D 53/94, F01N 3/10, F01N 3/28

(54) **CATALYST COMPOSITION FOR EXHAUST GAS PURIFICATION AND CATALYST FOR EXHAUST GAS PURIFICATION**

(30) Priority: 15.03.2021 JP 2021041763
(71) Applicant: Mitsui Mining & Smelting Co., Ltd., Shinagawa-ku Tokyo 141-8584 (JP)
(72) Inventor: ASAKOSHI Toshiki, Ageo-shi, Saitama 362-0025 (JP); ISAYAMA Akihiro, Ageo-shi, Saitama 362-0025 (JP); IWAKURA Hironori, Ageo-shi, Saitama 362-0025 (JP)
(74) Representative: Novagraaf Technologies
(86) International application number: PCT/JP2022/006717
(87) International publication number: WO 2022/196249

(57) **Abstract**

An object of the present invention is to provide an exhaust gas purification catalyst composition and an exhaust gas purification catalyst, each of which utilizes a phosphorus capturing material that enables solving a problem of MAO, and in order to achieve the object, a complex oxide containing Mg, Ba, and Al, wherein the complex oxide has a spinel-type crystal structure, and wherein a molar ratio of a Mg content to an Al content in the complex oxide is 0.010 or more and 0.25 or less is used as a phosphorus capturing material.

## Description

### FIELD OF THE INVENTION

The present invention relates to an exhaust gas purification catalyst composition and an exhaust gas purification catalyst.

### BACKGROUND ART

Exhaust gas emitted from an internal combustion engine of an automobile, a motorcycle, or the like contains harmful components such as hydrocarbons (THC), carbon monoxide (CO), and nitrogen oxide (NOx). A three-way catalyst is used to purify and detoxify those harmful components. A catalyst including a noble metal element such as Pt, Pd, and Rh is used as a three-way catalyst. Pt and Pd are mainly involved in oxidative purification of THC and CO, and Rh is mainly involved in reductive purification of NOx.

Various techniques have been developed to improve the exhaust gas purification performance of an exhaust gas purification catalyst. For example, Patent Document 1 describes a technique for providing a sulfur oxide (SOx) absorbing layer containing a SOx absorbing component such as MgO and hydrotalcite on the upside or upstream of a nitrogen oxide (NOx) absorbing layer to reduce the poisoning of the NOx absorbing layer by SOx. Patent Document 2 describes a technique using a spinel type of Mg-Al-based complex oxide, which is excellent in NOx absorbing capacity (inorganic oxide having spinel structure and containing magnesia and alumina), as a carrier of a noble metal.

### CITATION LIST

### PATENT DOCUMENT

Patent Document 1: International Publication No. WO 2006/044974
Patent Document 2: Japanese Patent Laid-Open No. 2018-187535

### SUMMARY OF THE INVENTION

Pt and Pd are easily poisoned by phosphorus. Accordingly, it is conceivable that Pt or Pd in a second catalyst layer can be prevented from being poisoned by providing a first catalyst layer containing Rh on the upside or upstream of the second catalyst layer to impart a function as a phosphorus capturing layer to the first catalyst layer.

It is known that a Mg-Al-based complex oxide (stoichiometric composition: MgAl₂O₄) having a spinel-type crystal structure (hereinafter referred to as "MAO") has phosphorus capturing capacity, and is useful as a phosphorus capturing material, but in the case where MAO is used for purifying exhaust gas with Rh and MAO coexisting, the exhaust gas purification performance of Rh is easily deteriorated by Mg contained in MAO. On the other hand, the present inventors have found that in the case where the Mg content in MAO is decreased to inhibit the deterioration of the exhaust gas purification performance of Rh, the phase splitting (phase splitting into a spinel-type crystal phase and an α-alumina phase) of MAO occurs due to heat treatment (calcining) performed at the time of producing MAO. This easily leads to a decrease in the specific surface area of MAO and a decrease in the phosphorus capturing capacity of MAO due to the decrease in the specific surface area of MAO.

Thus, an object of the present invention is to provide an exhaust gas purification catalyst composition and an exhaust gas purification catalyst, each of which utilizes a phosphorus capturing material that enables solving the above-mentioned problem of MAO.

To achieve the object, the present invention provides an exhaust gas purification catalyst composition, containing Rh and a complex oxide containing Mg, Ba, and Al,
wherein the complex oxide has a spinel-type crystal structure, and
wherein a molar ratio of a Mg content to an Al content in the complex oxide is 0.010 or more and 0.25 or less.

In addition, the present invention provides an exhaust gas purification catalyst, including a substrate and a first catalyst layer provided on the substrate,
wherein the first catalyst layer contains Rh and a complex oxide comprising Mg, Ba and Al,
wherein the complex oxide has a spinel-type crystal structure, and
wherein a molar ratio of a Mg content to an Al content in the complex oxide is 0.010 or more and 0.25 or less.

According to the present invention, there is provided an exhaust gas purification catalyst composition and an exhaust gas purification catalyst, each of which utilizes a phosphorus capturing material that enables solving the above-mentioned problem of MAO.

### BRIEF DESCRIPTION OF THE DRAWINGS

Figure 1 is a partial end view depicting the state where an exhaust gas purification catalyst according to a first embodiment of the present invention is disposed in an exhaust pathway of an internal-combustion engine.
Figure 2 is an end view taken along the line A-A in Figure 1.
Figure 3 is an enlarged view of the region denoted by the sign R in Figure 2.
Figure 4 is an end view taken along the line B-B in Figure 1.
Figure 5 is an end view (corresponding to Figure 4) of an exhaust gas purification catalyst according to a second embodiment of the present invention.
Figure 6 is a diagram showing the X-ray diffraction pattern of the Mg-Ba-Al-based complex oxide powder of Example 3.

### DETAILED DESCRIPTION OF THE INVENTION

### <<Exhaust Gas Purification Catalyst Composition

The exhaust gas purification catalyst composition of the present invention will now be described.

### <Form of the Exhaust Gas Purification Catalyst Composition>

The form of the exhaust gas purification catalyst composition of the present invention is, for example, a powder, a molded body, a layered body, or the like.

### <Mg-Ba-Al-based Complex Oxide>

The exhaust gas purification catalyst composition of the present invention contains a complex based oxide containing Mg, Ba, and Al (hereinafter referred to as the "Mg-Ba-AI-based complex oxide").

The amount of the Mg-Ba-Al-based complex oxide contained in the exhaust gas purification catalyst composition of the present invention is preferably 1% by mass or more and 20% by mass or less, more preferably 5% by mass or more and 17% by mass or less, and still more preferably 9% by mass or more and 15% by mass or less, based on the mass of the exhaust gas purification catalyst composition of the present invention, from the viewpoint of more effectively inhibiting Mg from deteriorating the exhaust gas purification performance of Rh. The amount of the Mg-Ba-Al-based complex oxide can be identified using a scanning electron microscope-energy dispersive X-ray spectrometer (SEM-EDX) or the like.

The Mg-Ba-Al-based complex oxide is, for example, in the form of a powder. In the case where the Mg-Ba-AI-based complex oxide is in the form of a powder, the D₅₀ of the Mg-Ba-Al-based complex oxide is, for example, 1 µm or more and 20 µm or less, preferably 3 µm or more and 15 µm or less, more preferably 5 µm or more and 10 µm or less. The D₅₀ is the particle size at which the cumulative volume reaches 50%, in a particle size distribution based on volume as measured by the laser diffraction scattering particle size distribution measurement method. The D₅₀ is preferably measured by the method described in the Examples.

The Mg-Ba-Al-based complex oxide is preferably porous from the viewpoint of improving the effect of the Mg-Ba-Al-based complex oxide as a phosphorus capturing material. As the specific surface area of the Mg-Ba-Al-based complex oxide increases, a phosphorus component is more easily captured, and the catalytically active component is also more easily supported. In the case where the amount of the catalytically active component supported by the Mg-Ba-Al-based complex oxide increases, the catalytic activity decreases. The BET specific surface area of the Mg-Ba-Al-based complex oxide is preferably 45 m²/g or more and 100 m²/g or less, more preferably 55 m²/g or more and 85 m²/g or less, and still more preferably 60 m²/g or more and 80 m²/g or less, from the viewpoint of achieving good balance between the ease of capturing the phosphorus component and a decrease in the amount to the catalytically active component supported. The BET specific surface area is preferably measured by the method described in the Examples.

The Mg-Ba-Al-based complex oxide has a spinel type crystal structure. That is, the Mg-Ba-AI-based complex oxide contains a crystal phase having a spinel type crystal structure (hereinafter referred to as a "spinel type crystal phase"). A spinel type structure is a crystal structure of the cubic crystal system and belongs to the space group Fd-3m.

The Mg-Ba-Al-based complex oxide may be constituted by a single phase of a spinel type crystal phase, or may be constituted by a phase mixture containing a spinel type crystal phase and one or more types of other phases, and is preferably constituted by a single phase of a spinel type crystal phase. The other phases may each be a crystal phase or an amorphous phase. Examples of the above-mentioned other phases include an alkaline-earth metal oxide phase (for example, a MgO phase, a BaO phase, or the like), an α alumina phase, alumina phases other than an α alumina phase (for example, a γ alumina phase, a θ alumina phase, or the like), a hydrotalcite phase, and the like.

In the case where the Mg-Ba-AI-based complex oxide is constituted by a phase mixture, a first phase is preferably a spinel type crystal phase. Alternatively, in the case where a first phase is an α alumina phase, a second phase is preferably a spinel type crystal phase. The "first phase" means a crystal phase from which a peak having a maximum intensity (a main peak) is derived in a diffraction pattern given by powder X-ray diffractometry (XRD) using CuKα. The "second phase" means a crystal phase from which a peak having a maximum intensity, chosen from among peaks other than the peak derived from the first phase, is derived.

The fact that the Mg-Ba-AI-based complex oxide contains a spinel type crystal phase can be verified by XRD using CuKα. XRD can be performed using a commercially available X-ray diffractometer (for example, a MiniFlex600 manufactured by Rigaku Corporation). XRD is preferably measured by the method described in the Examples.

In a diffraction pattern given by XRD using CuKα, a peak derived from a spinel type crystal phase is present, for example, at a position of 2θ = 15° to 25°, 30° to 40°, 40° to 50°, 55° to 70°, or the like. A peak derived from a spinel type crystal phase is preferably present at a position of 2θ = 37 ± 0.5°.

The Mg-Ba-Al-based complex oxide contains Ba (barium element) in addition to Mg (magnesium element), Al (aluminum element), and O (oxygen element), and the molar ratio of the Mg content to the Al content in the Mg-Ba-Al-based complex oxide is 0.010 or more and 0.25 or less.

The Mg-Ba-Al-based complex oxide differs from MAO (Mg-Al-based complex oxide having a spinel-type crystal structure (stoichiometric composition: MgAl₂O₄)) in that the Mg content in the Mg-Ba-Al-based complex oxide is decreased, and that Ba is contained (preferably dissolved) in the Mg-Ba-Al-based complex oxide. The above-mentioned problem of MAO is solved thereby. That is, in the Mg-Ba-Al-based complex oxide, the decrease in the Mg content inhibits Mg from deteriorating the exhaust gas purification performance of Rh. In the Mg-Ba-AI-based complex oxide, the incorporation (preferably dissolution) of Ba inhibits the phase splitting (phase splitting into a spinel-type crystal phase and an α-alumina phase) of the Mg-Ba-AI-based complex oxide that can be caused due to heat treatment (calcining) performed at the time of producing the Mg-Ba-AI-based complex oxide. This inhibits a decrease in the specific surface area of the Mg-Ba-AI-based complex oxide and a decrease in the phosphorus capturing capacity of the Mg-Ba-AI-based complex oxide due to this. Accordingly, the exhaust gas purification catalyst composition of the present invention can exhibit improved exhaust gas purification performance of Rh, and can exhibit improved phosphorus capturing performance.

In the Mg-Ba-AI-based complex oxide, Mg, Ba, Al, and O preferably form a solid solution phase having a spinel-type crystal structure. Mg, Ba, Al, and O may form a single phase (such as a MgO phase, a BaO phase, an Al₂O₃ phase, or the like) that is a crystal phase or an amorphous phase in addition to the solid solution phase having a spinel-type crystal structure. It can be confirmed using XRD, SEM-EDX, or the like that Mg, Ba, Al and O form a solid solution phase.

The Mg-Ba-AI-based complex oxide may contain a metal element other than Mg, Ba and Al. Examples of the metal element other than Mg, Ba and Al include alkali metal elements, alkaline-earth metal elements, rare-earth elements, and transition metal elements. The metal element other than Mg, Ba and Al may form a solid solution phase having a spinel-type crystal structure with Mg, Ba, Al, and O, or may form a single phase that is a crystal phase or an amorphous phase. It can be confirmed using XRD, SEM-EDX, or the like that the metal element other than Mg, Ba and Al forms a solid solution phase with Mg, Ba, Al and O.

In the Mg-Ba-AI-based complex oxide, the molar ratio of the Mg content to the Al content is preferably 0.010 or more and 0.25 or less, more preferably 0.020 or more and 0.20 or less, still more preferably 0.030 or more and 0.15 or less, and still more preferably 0.050 or more and 0.10 or less, from the viewpoint of inhibiting Mg from deteriorating of the exhaust gas purification performance of Rh more effectively.

In the Mg-Ba-AI-based complex oxide, the molar ratio of the Ba content to the Al content is preferably 0.0010 or more and 0.10 or less, more preferably 0.0020 or more and 0.090 or less, still more preferably 0.0030 or more and 0.080 or less, and still more preferably 0.0050 or more and 0.070 or less, from the viewpoint of inhibiting a decrease in the specific surface area of the Mg-Ba-Al-based complex oxide due to the phase splitting (phase splitting into the spinel-type crystal phase and the α-alumina phase) of the Mg-Ba-Al-based complex oxide and a decrease in the phosphorus capturing capacity of the Mg-Ba-Al-based complex oxide due to this more effectively.

In the Mg-Ba-Al-based complex oxide, the molar ratio of the Ba content to the Mg content is preferably 0.010 or more and 1.0 or less, more preferably 0.030 or more and 0.90 or less, still more preferably 0.050 or more and 0.80 or less, and still more preferably 0.10 or more and 0.60 or less, from the viewpoint of inhibiting a decrease in the specific surface area of the Mg-Ba-Al-based complex oxide due to the phase splitting (phase splitting into the spinel-type crystal phase and the α-alumina phase) of the Mg-Ba-Al-based complex oxide and a decrease in the phosphorus capturing capacity of the Mg-Ba-Al-based complex oxide due to this more effectively.

In the Mg-Ba-Al-based complex oxide, the content of Al in terms of Al₂O₃ is preferably 52% by mass or more and less than 99% by mass, more preferably 70% by mass or more and 98.99% by mass or less, and still more preferably 78% by mass or more and 98.9% by mass or less, based on the mass of the Mg-Ba-Al-based complex oxide, from the viewpoint of inhibiting a decrease in the specific surface area of the Mg-Ba-Al-based complex oxide due to the phase splitting (phase splitting into the spinel-type crystal phase and the α-alumina phase) of the Mg-Ba-Al-based complex oxide and a decrease in the phosphorus capturing capacity of the Mg-Ba-Al-based complex oxide due to this more effectively.

In the Mg-Ba-Al-based complex oxide, the content of Mg in terms of MgO is preferably more than 0% by mass and 28% by mass or less, more preferably 0.01 % by mass or more and 15% by mass or less, and still more preferably 0.05% by mass or more and 10% by mass or less, based on the mass of the Mg-Ba-Al-based complex oxide, from the viewpoint of inhibiting Mg from deteriorating the exhaust gas purification performance of Rh more effectively.

In the Mg-Ba-Al-based complex oxide, the content of Ba in terms of BaO is preferably 0.1% by mass or more and 20% by mass or less, more preferably 0.5% by mass or more and 15% by mass or less, and still more preferably 1% by mass or more and 12% by mass or less, based on the mass of the Mg-Ba-Al-based complex oxide, from the viewpoint of inhibiting a decrease in the specific surface area of the Mg-Ba-Al-based complex oxide due to the phase splitting (phase splitting into the spinel-type crystal phase and the α-alumina phase) of the Mg-Ba-Al-based complex oxide and a decrease in the phosphorus capturing capacity of the Mg-Ba-Al-based complex oxide due to this more effectively and inhibiting the generation of a Ba-Al-based complex oxide.

In the Mg-Ba-Al-based complex oxide, the total content of the content of Al in terms of Al₂O₃, the content of Mg in terms of MgO and the content of Ba in terms of BaO is preferably 90% by mass or more, more preferably 95% by mass or more, and still more preferably 99.95% by mass or more, based on the mass of the Mg-Ba-Al-based complex oxide, from the viewpoint of inhibiting the generation of crystal phases other than the spinel-type crystal phase in the Mg-Ba-Al-based complex oxide and inhibiting a decrease in the specific surface area of the Mg-Ba-Al-based complex oxide and a decrease in the phosphorus capturing capacity of the Mg-Ba-Al-based complex oxide due to this more effectively. The upper limit value is 100% by mass.

The types and amounts of elements contained in the Mg-Ba-Al-based complex oxide can be identified using SEM-EDX or the like.

### <Method for producing Mg-Ba-Al-based complex oxide>

For example, a Mg-Ba-AI-based complex oxide can be produced as follows. To an aqueous solution containing a base is added an aqueous solution containing a Ba salt, a Mg salt, and an Al salt to form a precipitate containing Ba, Mg, and Al. The obtained precipitate is dried, if desired, and calcined to produce the Mg-Ba-AI-based complex oxide. The calcined product may be pulverized as necessary. The pulverization can be carried out by a dry process or a wet process, using, for example, a mortar, a hammer mill, a ball mill, a bead mill, a jet mill, a roller mill, or the like. The Ba salt, the Mg salt, and the Al salt each may be, for example, a water-soluble salt such as a nitrate, an acetate or the like. The base may be, for example, an ammonium carbonate, an ammonium hydrogen carbonate or the like. The drying temperature is, for example, 60°C or more and 120°C or less. The drying time is, for example, 0.5 hours or more and 3 hours or less. The calcining temperature is, for example, 900°C or more and 1400°C or less. The calcining time is, for example, 0.5 hours or more and 4 hours or less. The calcining can be performed, for example, in an air atmosphere.

### <Catalytically active component>

The exhaust gas purification catalyst composition of the present invention contains Rh (rhodium element). Rh contained in the exhaust gas purification catalyst composition of the present invention is in the form capable of functioning as a catalytically active component, for example, in the form of metal Rh, an alloy containing Rh, a compound containing Rh (for example, an oxide of Rh), or the like. The catalytically active component such as metal Rh, an alloy containing Rh, or a compound containing Rh is preferably particulate from the viewpoint of enhancing the exhaust gas purification performance.

The amount of Rh contained in the exhaust gas purification catalyst composition of the present invention is preferably 0.001 % by mass or more and 5% by mass or less, more preferably 0.001% by mass or more and 3% by mass or less, and still more preferably 0.001% by mass or more and 1 % by mass or less, based on the mass of the exhaust gas purification catalyst composition of the present invention, from the viewpoint of achieving good balance between the exhaust gas purification performance and the cost. The amount of Rh can be identified using an inductively coupled plasma emission spectrophotometer (ICP-OES), an X-ray fluorescence analyzer (XRF), an SEM-EDX, or the like. The mass of Rh is mass in terms of metal.

The exhaust gas purification catalyst composition of the present invention may contain a noble metal element other than Rh. Examples of the noble metal element other than Rh include Pt (platinum element), Pd (palladium element), Ru (ruthenium element), Ir (iridium element), and Os (osmium element). The noble metal element other than Rh contained in the exhaust gas purification catalyst composition of the present invention in in the form capable of functioning as a catalytically active component, for example, in the form selected from noble metal, an alloy containing the noble metal element, a compound containing the noble metal element (for example, an oxide of the noble metal element), or the like. The catalytically active component such as noble metal, an alloy containing the noble metal element, or a compound containing the noble metal element is preferably particulate from the viewpoint of enhancing the exhaust gas purification performance. However, in the case where the exhaust gas purification catalyst composition of the present invention contains Rh and the noble metal other than Rh, Rh and the noble metal other than Rh form an alloy, and the active sites of Rh participating in exhaust gas purification (for example, the reductive purification of NOx) may decrease. In addition, the noble metal (for example, Pd, Pt, or the like) other than Rh may be poisoned by phosphorus. Accordingly, it is preferable that the exhaust gas purification catalyst composition of the present invention do not contain the noble metal other than Rh substantially. The expression "not contain the noble metal other than Rh substantially" means that the amount of the noble metal other than Rh contained in the exhaust gas purification catalyst composition of the present invention is preferably 0.01% by mass or less, more preferably 0.005% by mass or less, and still more preferably 0.001% by mass or less, based on the mass of the exhaust gas purification catalyst composition of the present invention. The lower limit is zero. The amount of the noble metal other than Rh can be identified in the same manner as the amount of Rh. The mass of the noble metal other than Rh is mass in terms of metal.

Although the catalytically active component may be supported by Mg-Ba-Al-based complex oxide, it is preferable that the catalytically active component is not supported by the Mg-Ba-Al-based complex oxide, from the viewpoint of improving the effect of the Mg-Ba-Al-based complex oxide as a phosphorus capturing material. The term "supported" refers to a state in which the catalytically active component is physically or chemically absorbed or retained on the outer surface or on the inner surface of the pores of the Mg-Ba-Al-based complex oxide. The fact that the catalytically active component is supported by the Mg-Ba-Al-based complex oxide can be confirmed, for example, by using SEM-EDX or the like.

### <Other components>

The exhaust gas purification catalyst composition of the present invention may contain an inorganic oxide other than the Mg-Ba-Al-based complex oxide (hereinafter referred to as the "other inorganic oxide").

The other inorganic oxide is, for example, in the form of a powder. In the case where the other inorganic oxide is in the form of a powder, the D₅₀ of the other inorganic oxide is, for example, 0.1 µm or more and 15 µm or less, preferably 0.3 µm or more and 12 µm or less, more preferably 0.5 µm or more and 10 µm or less. The D₅₀ of the other inorganic oxide can be measured in the same manner as the D₅₀ of the Mg-Ba-Al-based complex oxide.

The other inorganic oxide is preferably porous from the viewpoint that the catalytically active component is easily supported. The BET specific surface area of the other inorganic oxide is, for example 40 m²/g or more and 300 m²/g or less, preferably 50 m²/g or more and 250 m²/g or less, and more preferably 60 m²/g or more and 200 m²/g or less. The BET specific surface area of the other inorganic oxide can be measured in the same manner as the BET specific surface area of the Mg-Ba-Al-based complex oxide.

The other inorganic oxide may be an inorganic oxide having oxygen storage capacity (OSC), or may be an inorganic oxide not having an oxygen storage capacity.

Examples of an inorganic oxide having oxygen storage capacity include cerium oxide, a complex oxide containing Ce (cerium element) and Zr (zirconium element) (Ce-Zr-based complex oxide), and the like.

The Ce-Zr-based complex oxide includes Ce, Zr and O. In the Ce-Zr-based complex oxide, Ce, Zr, and O preferably have the form of a solid solution phase. Ce, Zr and O may form a single phase (such as a CeO₂ phase, a ZrO₂ phase or the like) that is a crystal phase or an amorphous phase in addition to the solid solution phase. It can be confirmed using XRD, SEM-EDX, or the like that Ce, Zr and O form a solid solution.

The Ce-Zr-based complex oxide may contain a metal element other than Ce and Zr. Examples of the metal element other than Ce and Zr include rare earth elements other than Ce, alkaline earth metal elements, and transition metal elements, and the like. The metal element other than Ce and Zr may have the form of a solid solution phase with Ce, Zr and O, or may have the form of a single phase that is a crystal phase or an amorphous phase.

Examples of an inorganic oxide not having oxygen storage capacity include alumina, silica, silica-alumina, alumino-silicates, alumina-zirconia, alumina-chromia, alumina-ceria, alumina-lanthana, titania, and the like. Alumina is preferable from the viewpoint of heat resistance.

The exhaust gas purification catalyst composition of the present invention preferably contains the other inorganic oxide in an amount more than that of the Mg-Ba-Al-based complex oxide, from the viewpoint of inhibiting Mg from deteriorating the exhaust gas purification performance of Rh more effectively and further improving the effect of the Mg-Ba-Al-based complex oxide as a phosphorus capturing material.

In the exhaust gas purification catalyst composition of the present invention, the mass ratio of the content of the other inorganic oxide to the content of the Mg-Ba-Al-based complex oxide is preferably more than 1.0 and 10 or less and more preferably 1.5 or more and 10 or less. In the case where the exhaust gas purification catalyst composition of the present invention contains two or more other inorganic oxides, "the content of the other inorganic oxide" means the total content of the two or more other inorganic oxides. The amount of the other inorganic oxide can be identified using an ICP-OES, an XRF, an SEM-EDX, or the like.

In the case where the exhaust gas purification catalyst composition of the present invention contains the other inorganic oxide, the catalytically active component may be supported by the other inorganic oxide. In the case where the exhaust gas purification catalyst composition of the present invention contains the other inorganic oxide, and the catalytically active component is not supported by the Mg-Ba-Al-based complex oxide, the catalytically active component is supported by the other inorganic oxide. The meaning of "supported" and the method for confirming that the catalytically active component is supported are the same way as described above.

### <Method of Producing Exhaust Gas Purification Catalyst Composition>

The exhaust gas purification catalyst composition of the present invention can be produced, for example, by mixing a solution containing a Rh salt, the Mg-Ba-AI-based complex oxide, and optionally other components (for example, an inorganic oxide other than the Mg-Ba-Al-based complex oxide), followed by drying and calcination. The calcined product may be pulverized as necessary. The pulverization can be carried out by a dry process or a wet process, using, for example, a mortar, a hammer mill, a ball mill, a bead mill, a jet mill, a roller mill, or the like. The Rh salt may be, for example, a nitrate, an ammine complex salt, a chloride or the like. The solvent contained in the solution containing the Rh salt is usually water (such as ion exchanged water). The solution containing the Rh salt may contain one or two or more solvents other than water. Examples of the solvent other than water include organic solvents such as alcohols, acetone, dimethyl sulfoxide and dimethylformamide. The drying temperature is, for example, 60°C or more and 120°C or less, and the drying time is, for example, 0.5 hours or more and 2 hours or less. The calcination temperature is, for example, 400°C or more and 700°C or less, and the calcination time is, for example, 0.5 hours or more and 3 hours or less. The calcination can be carried out, for example, in an air atmosphere.

### <<Exhaust Gas Purification Catalyst>>

The exhaust gas purification catalyst of the present invention will now be described.

### <Substrate>

The exhaust gas purification catalyst of the present invention includes a substrate. The substrate can be selected as appropriate from substrates of conventional exhaust gas purifying catalysts. Examples of the substrate include a wall-flow substrate and a flow-through substrate.

The substrate can be made of any material selected as appropriate from materials commonly used for forming substrates of exhaust gas purification catalysts. The material for forming the substrate is preferably a material that allows the substrate to stably maintain its shape even when the substrate is exposed to a high-temperature (such as 400°C or more) exhaust gas. Examples of the material of the substrate include: ceramics such as cordierite, silicon carbide (SiC) and aluminum titanate; and alloys such as stainless steel.

### <First catalyst layer>

The exhaust gas purification catalyst of the present invention includes a first catalyst layer provided on the substrate. The first catalyst layer may be provided directly on the substrate, or may be provided on the substrate through another layer (for example, a second catalyst layer described below).

The first catalyst layer contains Rh and the Mg-Ba-AI-based complex oxide.

The first catalyst layer is composed of the exhaust gas purification catalyst composition of the present invention. Accordingly, the descriptions in the above-mentioned sections <Mg-Ba-Al-based complex oxide>, <Method for producing Mg-Ba-Al-based complex oxide>, <Catalytically active component>, and <Other components> are also applied to the first catalyst layer. When the descriptions are applied to the first catalyst layer, "the exhaust gas purification catalyst composition of the present invention" in the descriptions is read as "the first catalyst layer".

The mass (mass after drying and calcining) of the first catalyst layer per the unit volume of the substrate is preferably 30 g/L or more and 100 g/L or less, more preferably 30 g/L or more and 90 g/L or less, and still more preferably 30 g/L or more and 80 g/L or less, from the viewpoint of inhibiting Mg from deteriorating of the exhaust gas purification performance of Rh more effectively and further improving the effect of the Mg-Ba-Al-based complex oxide as a phosphorus capturing material. The volume of the substrate means the apparent volume of the substrate (in the same way hereinafter). For example, in the case where the substrate is in the form of a cylinder having an external diameter of 2r, the volume of the substrate is represented by the expression: Volume of substrate = π × r² × (Length of substrate).

The mass of Rh contained in the first catalyst layer is preferably 0.1 g/L or more and 5 g/L or less, more preferably 0.1 g/L or more and 3 g/L or less, and still more preferably 0.1 g/L or more and 1 g/L or less, based on the unit volume of the substrate, from the viewpoint of achieving good balance between the exhaust gas purification performance and the cost. The amount of Rh can be identified using an ICP-OES, an XRF, an SEM-EDX, or the like. The mass of Rh is mass in terms of metal.

The mass of the Mg-Ba-Al-based complex oxide contained in the first catalyst layer is preferably 0.1 g/L or more and 25 g/L or less, more preferably 0.1 g/L or more and 20 g/L or less, and still more preferably 0.1 g/L or more and 10 g/L or less, based on unit volume of the substrate, from the viewpoint of inhibiting Mg from deteriorating the exhaust gas purification performance of Rh more effectively and further improving the effect of the Mg-Ba-Al-based complex oxide as a phosphorus capturing material. The amount of the Mg-Ba-Al-based complex oxide can be identified using an ICP-OES, an XRF, an SEM-EDX, or the like.

### <Second catalyst layer>

The exhaust gas purification catalyst of the present invention may include the second catalyst layer provided on the substrate. The second catalyst layer may be provided directly on the substrate, or may be provided on the substrate through another layer.

In the case where the second catalyst layer is provided on the substrate, the first catalyst layer is preferably provided in the upside or upstream of the second catalyst layer.

The expression "the first catalyst layer is provided on the upside of the second catalyst layer" means that a part or all of the first catalyst layer is present on, of the two principal surfaces of the second catalyst layer, the principal surface opposite to the principal surface on the substrate surface side on which the second catalyst layer is provided. The first catalyst layer may be provided directly on the principal surface of the second catalyst layer, or may be provided through another layer.

The expression "the first catalyst layer is provided upstream of the second catalyst layer" means that a part or all of the first catalyst layer is present in, of the surfaces of the substrate, a region located upstream of a region in which the second catalyst layer is provided, in the exhaust gas flow direction.

The mass (mass after drying and calcining) of the second catalyst layer per the unit volume of the substrate is preferably 40 g/L or more and 250 g/L or less, more preferably 40 g/L or more and 230 g/L or less, and still more preferably 40 g/L or more and 210 g/L or less, from the viewpoint of achieving good balance between the exhaust gas purification performance and the cost.

The second catalyst layer contains Pd (palladium element) or Pt (Pt element). The second catalyst layer may contain both Pd and Pt. Pd or Pt contained in the second catalyst layer is in the form capable of functioning as a catalytically active component, for example, in the form of metal Pd, metal Pt, an alloy containing Pd or Pt, a compound containing Pd or Pt (for example, oxide of Pd or Pt), or the like. The catalytically active component such as metal Pd, metal Pt, an alloy containing Pd or Pt, or a compound containing Pd or Pt is preferably particulate from the viewpoint of enhancing the exhaust gas purification performance.

The mass of Pd contained in the second catalyst layer is preferably 0.1 g/L or more and 10 g/L or less, more preferably 0.1 g/L or more and 8 g/L or less, and still more preferably 0.1 g/L or more and 5 g/L or less, based on the unit volume of the substrate, from the viewpoint of achieving good balance between the exhaust gas purification performance and the cost. The mass of Pt contained in the second catalyst layer is preferably 0.1 g/L or more and 10 g/L or less, more preferably 0.1 g/L or more and 8 g/L or less, and still more preferably 0.1 g/L or more and 5 g/L or less, based on the unit volume of the substrate, from the viewpoint of achieving good balance between the exhaust gas purification performance and the cost. The amount of Pd or Pt can be identified using an ICP-OES, an XRF, an SEM-EDX, or the like. The mass of Pd or Pt is mass in terms of metal.

The second catalyst layer may contain a noble metal element other than Pd and Pt. Examples of the noble metal element other than Pd and Pt include Rh, Ru, Ir, and Os. The noble metal element other than Pd and Pt contained in the second catalyst layer is in the form capable of functioning as a catalytically active component, for example, in the form of noble metal, an alloy containing the noble metal element, a compound containing the noble metal element (for example, an oxide of the noble metal element), or the like. The catalytically active component such as noble metal, an alloy containing the noble metal element, or a compound containing the noble metal element is preferably particulate from the viewpoint of enhancing the exhaust gas purification performance.

The second catalyst layer may contain an inorganic oxide. The inorganic oxide contained in the second catalyst layer is preferably an inorganic oxide other than the Mg-Ba-Al-based complex oxide.

The mass of the inorganic oxide contained in the second catalyst layer is, for example, 30 g/L or more and 250 g/L or less, preferably 30 g/L or more and 230 g/L or less, and more preferably 30 g/L or more and 210 g/L or less, based on the unit volume of the substrate. In the case where the second catalyst layer contains two or more inorganic oxides, "the mass of the inorganic oxide" means the total mass of the two or more inorganic oxides. The amount of the inorganic oxide can be identified using an ICP-OES, an XRF, an SEM-EDX, or the like.

The inorganic oxide is, for example, in the form of a powder. In the case where the inorganic oxide is in the form of a powder, the D₅₀ of the inorganic oxide is, for example, 0.1 µm or more and 60 µm or less, preferably 0.1 µm or more and 45 µm or less, more preferably 0.1 µm or more and 30 µm or less. The D₅₀ of the inorganic oxide can be measured in the same manner as the D₅₀ of the Mg-Ba-Al-based complex oxide.

The inorganic oxide is preferably porous from the viewpoint that the catalytically active component is easily supported. The BET specific surface area of the inorganic oxide is, for example 40 m²/g or more and 300 m²/g or less, preferably 50 m²/g or more and 250 m²/g or less, and more preferably 60 m²/g or more and 200 m²/g or less. The BET specific surface area of the inorganic oxide can be measured in the same manner as the BET specific surface area of the Mg-Ba-Al-based complex oxide.

The inorganic oxide may be an inorganic oxide having oxygen storage capacity, or may be an inorganic oxide not having oxygen storage capacity. The descriptions of the inorganic oxide having oxygen storage capacity and the inorganic oxide not having oxygen storage capacity are the same as described above.

The catalytically active component is preferably supported by the inorganic oxide. The meaning of "supported" and the method for confirming that the catalytically active component is supported are the same as described above.

### <First embodiment>

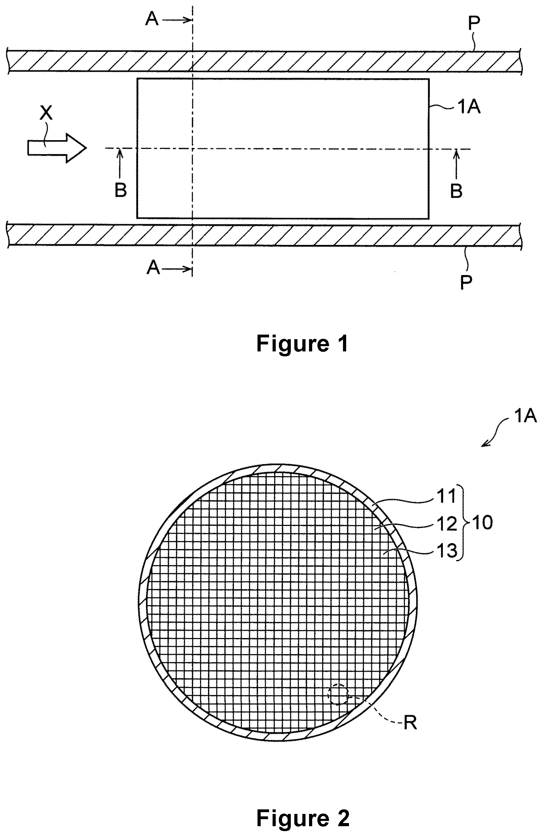

Hereinafter, an exhaust gas purification catalyst 1A according to a first embodiment of the present invention will be described based on Figures 1 to 4.

As depicted in Figure 1, the exhaust gas purification catalyst 1A is disposed in an exhaust gas path in an exhaust pipe P of an internal-combustion engine. Examples of the internal-combustion engine include a gasoline engine and the like. Exhaust gas emitted from the internal-combustion engine flows from one end of the exhaust pipe P toward the other end through the exhaust gas path in the exhaust pipe P, and is purified by the exhaust gas purification catalyst 1A provided in the exhaust pipe P. In the drawing, the exhaust gas flow direction is denoted by the reference sign X. In the present description, the upstream position in the exhaust gas flow direction X is referred to as the "exhaust gas in-flow side", and the downstream position in the exhaust gas flow direction X is referred to as the "exhaust gas out-flow side", in some cases.

Together with the exhaust gas purification catalyst 1A, another exhaust gas purification catalyst may be disposed in the exhaust gas path in the exhaust pipe P. For example, it is possible that the exhaust gas purification catalyst 1A is disposed upstream in the exhaust gas path in the exhaust pipe P, and that another exhaust gas purification catalyst is disposed downstream in the exhaust gas path in the exhaust pipe P. Examples of the other exhaust gas purification catalyst include the below-mentioned exhaust gas purification catalyst 1B and the like.

As shown in Figures 2 to 4, the exhaust gas purification catalyst 1A includes a substrate 10, a second catalyst layer 30 provided on the substrate 10, and a first catalyst layer 20 provided on the upside of the second catalyst layer 30.

The above descriptions of the substrate, the first catalyst layer, and the second catalyst layer are applied to the substrate 10, the first catalyst layer 20, and the second catalyst layer 30, respectively.

As depicted in Figures 2 to 4, the substrate 10 includes: a tubular member 11 that defines the external shape of the substrate 10; a partition wall 12 provided in the tubular member 11; and cells 13 separated from each other by the partition wall 12.

As depicted in Figure 2, the tubular member 11 has a hollow cylindrical shape, and may have another shape, for example, an elliptic cylindrical shape or a polygonal tubular shape.

As depicted in Figures 2 to 4, the partition wall 12 exists between the adjacent cells 13, and the adjacent cells 13 are separated from each other by the partition wall 12. The partition wall 12 is preferably porous. The thickness of the partition wall 12 is, for example, 40 µm or more and 350 µm or less.

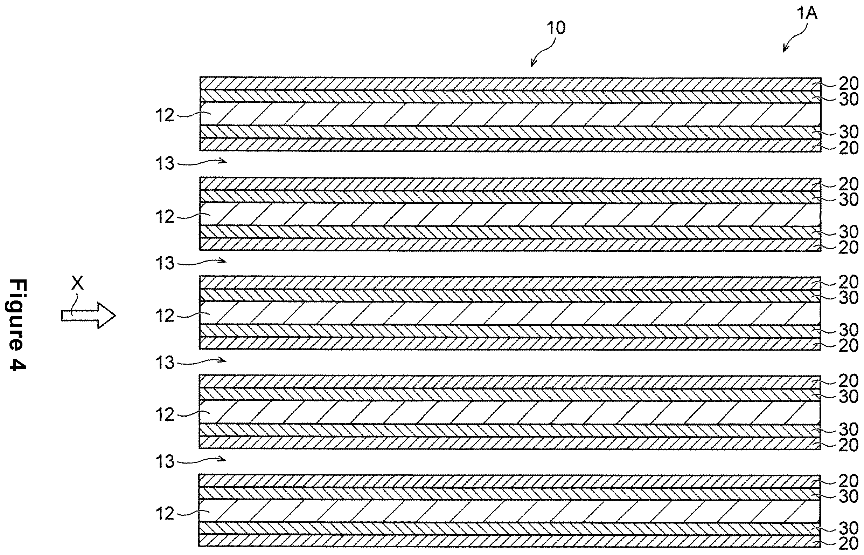

As depicted in Figure 4, the cells 13 each extend in the exhaust gas flow direction X, and each have an end at the exhaust gas in-flow side and an end at the exhaust gas out-flow side.

As depicted in Figure 4, both of the exhaust gas in-flow side end and the exhaust gas out-flow side end of the cell 13 are open. Accordingly, exhaust gas that has flowed in through the exhaust gas in-flow side end (opening) of the cell 13 flows out through the exhaust gas out-flow side end (opening) of the cell 13. Such a manner is called a flow-through type.

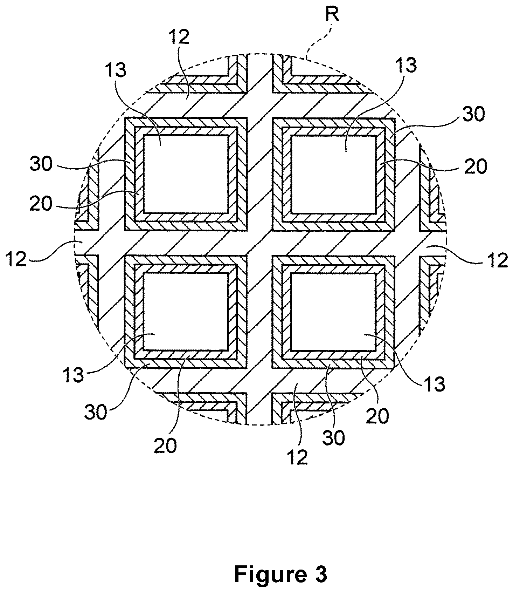

As depicted in Figures 2 and 3, the planar-view shape of the exhaust gas in-flow side end (opening) of the cell 13 is quadrangle, and may be otherwise, for example, hexagonal or octagonal. The same applies to the planar-view shape of the exhaust gas out-flow side end (opening) of the cell 13.

The density of the cells per square inch of the substrate 10 is, for example, 150 cells or more and 1500 cells or less. The density of the cells per square inch of the substrate 10 is the total number of the cells 13 per square inch of the cross-section obtained by cutting the substrate 10 along the plane perpendicular to the exhaust gas flow direction X.

As depicted in Figure 4, the second catalyst layer 30 is provided on the partition wall 12 of the substrate 10.

As depicted in Figure 4, the second catalyst layer 30 extends in the exhaust gas flow direction X from the exhaust gas in-flow side end of the partition wall 12 up to the exhaust gas out-flow side end of the partition wall 12. The second catalyst layer 30 may extend in the exhaust gas flow direction X from the exhaust gas in-flow side end of the partition wall 12 but not up to the exhaust gas out-flow side end of the partition wall 12, or may extend in the direction opposite to the exhaust gas flow direction X from the exhaust gas out-flow side end of the partition wall 12 but not up to the exhaust gas in-flow side end of the partition wall 12.

As depicted in Figure 4, the first catalyst layer 20 is provided on the upside of the second catalyst layer 30.

As depicted in Figure 4, the first catalyst layer 20 extends in the exhaust gas flow direction X from the exhaust gas in-flow side end of the partition wall 12 up to the exhaust gas out-flow side end of the partition wall 12. The first catalyst layer 20 may extend in the exhaust gas flow direction X from the exhaust gas in-flow side end of the partition wall 12 but not up to the exhaust gas out-flow side end of the partition wall 12, or may extend in the direction opposite to the exhaust gas flow direction X from the exhaust gas out-flow side end of the partition wall 12 but not up to the exhaust gas in-flow side end of the partition wall 12.

In the exhaust gas purification catalyst 1A, the first catalyst layer 20 is provided on the upside of the second catalyst layer 30. Thus, exhaust gas that has flowed in from the end (opening) on the exhaust gas inflow side of the cell 13 contacts with the first catalyst layer 20, and then contacts with the second catalyst layer 30. When the exhaust gas contacts with the first catalyst layer 20, phosphorus in the exhaust gas is captured by the Mg-Ba-Al-based complex oxide in the first catalyst layer 20. This prevents phosphorus from poisoning Pd or Pt contained in the second catalyst layer 30. Accordingly, the second catalyst layer 30 can exhibit improved exhaust gas purification performance of Pd or Pt.

In the Mg-Ba-Al-based complex oxide, Mg is prevented from deteriorating the exhaust gas purification performance of Rh due to a decrease in the Mg content. Therefore, the first catalyst layer 20 can exhibit improved exhaust gas purification performance of Rh. In addition, in the Mg-Ba-Al-based complex oxide, the phase splitting of the Mg-Ba-Al-based complex oxide (phase splitting into a spinel-type crystal phase and an α-alumina phase) that can be caused due to heat treatment (calcining) performed at the time of producing the Mg-Ba-Al-based complex oxide is prevented by the incorporation (preferably dissolution) of Ba. This prevents a decrease in the specific surface area of the Mg-Ba-Al-based complex oxide and a decrease in the phosphorus capturing capacity of the Mg-Ba-Al-based complex oxide due to the decrease in the specific surface area of the Mg-Ba-Al-based complex oxide. Therefore, the first catalyst layer 20 can exhibit improved phosphorus capturing performance. This prevents phosphorus from poisoning Pd or Pt contained in the second catalyst layer 30 effectively. Thus, the second catalyst layer 30 can exhibit improved exhaust gas purification performance of Pd or Pt.

The exhaust gas purification catalyst 1A can be produced by forming the second catalyst layer 30 on the substrate 10 and then forming the first catalyst layer 20 on the upside of the second catalyst layer 30.

The second catalyst layer 30 can be formed by mixing a supply source of a noble metal element (for example, a noble metal salt, or the like), and (an)other component(s) (for example, an inorganic oxide, a binder, a stabilizer, a solvent, and/or the like) to prepare a second slurry, coating the substrate 10 with the second slurry, drying the resulting material, and calcining the resulting material.

The first catalyst layer 20 can be formed by mixing a supply source of a noble metal element (for example, a noble metal salt, or the like), and (an)other component(s) (for example, the Mg-Ba-AI-based complex oxide, another inorganic oxide, a binder, a stabilizer, a solvent, and/or the like) to prepare a first slurry, coating the second catalyst layer 30 with the first slurry, drying the resulting material, and calcining the resulting material.

Examples of the binder include metal oxide sols such as an aluminum oxide sol, titanium oxide sol, cerium oxide sol, and zirconium oxide sol. Examples of the stabilizer include an alkaline earth metal compound (e.g., a nitrate, carbonate, or oxide of Ba (barium element)). Examples of the solvent include water, organic solvents, and the like.

The drying temperature is, for example, 60°C or more and 120°C or less. The drying time is, for example, 0.5 hours or more and 120 hours or less. The calcining temperature is, for example, 400°C or more and 700°C or less. The calcining time is, for example, 0.5 hours or more and 3 hours or less. The calcining can be performed, for example, in an air atmosphere.

### <Second embodiment>

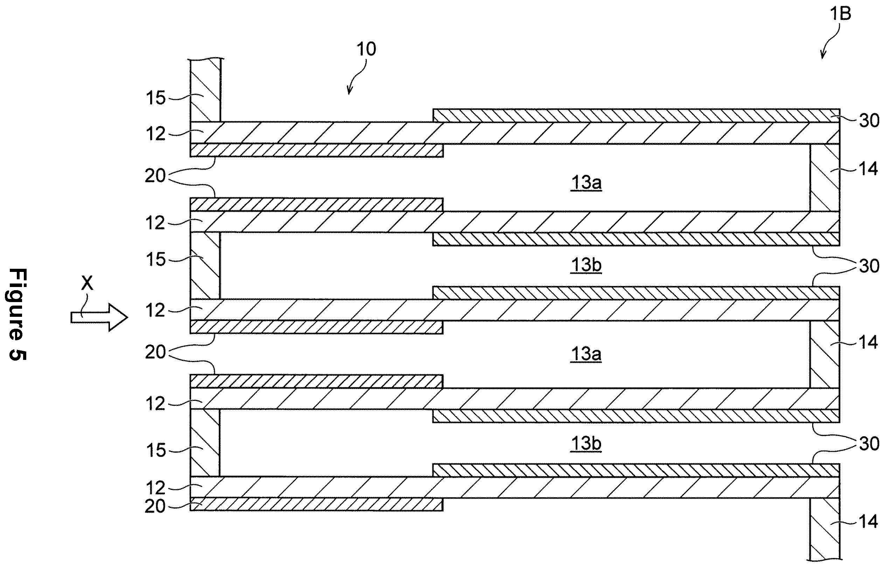

Hereinafter, an exhaust gas purification catalyst 1B according to a second embodiment of the present invention will be described based on Figure 5. In the exhaust gas purification catalyst 1B, the same members as in the exhaust gas purification catalyst 1A are denoted by the same reference signs as for the exhaust gas purification catalyst 1A. Unless otherwise specified below, the above descriptions related to the exhaust gas purification catalyst 1A apply to the exhaust gas purification catalyst 1B.

As depicted in Figure 5, the exhaust gas purification catalyst 1B differs from the exhaust gas purification catalyst 1A,
in that a first sealing portion 14 that seals the exhaust gas out-flow side end of each of part of the cells 13 and a second sealing portion 15 that seals the exhaust gas in-flow side end of each of the remaining cells 13 are provided in the substrate 10, whereby an in-flow cell 13a wherein the exhaust gas in-flow side end thereof is open and the exhaust gas out-flow side end thereof is closed with the first sealing portion 14, and an out-flow cell 13b wherein the exhaust gas in-flow side end thereof is closed with the second sealing portion 15 and the exhaust gas out-flow side end thereof is open are formed in the substrate 10, and
in that the second catalyst layer 30 is provided on the out-flow cell 13b side of the partition wall 12 of the substrate 10, and the first catalyst layer 20 is provided on the in-flow cell 13a side of the partition wall 12 of the substrate 10.

As depicted in Figure 5, a plurality of (for example, four) out-flow cells 13b are disposed adjacently around one in-flow cell 13a, and the in-flow cell 13a and the out-flow cells 13b adjacent to the in-flow cell 13a are separated from each other by the porous partition wall 12.

As depicted in Figure 5, the second catalyst layer 30 extends in the direction opposite to the exhaust gas flow direction X from the exhaust gas out-flow side end of the partition wall 12 but not up to the exhaust gas in-flow side end of the partition wall 12, and the first catalyst layer 20 extends in the exhaust gas flow direction X from the exhaust gas in-flow side end of the partition wall 12 but not up to the exhaust gas out-flow side end of the partition wall 12. That is, the first catalyst layer 20 is provided upstream of the second catalyst layer 30.

The the first catalyst layer 20 may extend up to the exhaust gas out-flow side end of the partition wall 12. The second catalyst layer 30 may extend up to the exhaust gas in-flow side end of the partition wall 12.

As shown in Figure 5, the first catalyst layer 20 has a portion rising from the surface of the partition wall 12 toward the cell 13a side, and the second catalyst layer 30 has a portion rising from the surface of the partition wall 12 toward the cell 13b side. The first catalyst layer 20 and the second catalyst layer 30 may be each constituted of only the above-mentioned portion, or may each have a portion that is present inside the partition wall 12. The first catalyst layer 20 and the second catalyst layer 30 may be each constituted of only the portion that is present inside the partition wall 12.

In the exhaust gas purification catalyst 1B, exhaust gas that has flowed in through the exhaust gas in-flow side end (opening) of the in-flow cell 13a passes through the porous partition wall 12, and flows out through the exhaust gas out-flow side end (opening) of the out-flow cell 13b. Such a manner is called a wall-flow type.

When exhaust gas that has flowed in through the exhaust gas in-flow side end (opening) of the in-flow cell 13a passes through the porous partition wall 12 in the exhaust gas purification catalyst 1B, particulate matter (PM) in the exhaust gas is collected in the pores of the partition wall 12. Accordingly, the exhaust gas purification catalyst 1B is useful as a gasoline particulate filter for a gasoline engine or a diesel particulate filter for a diesel engine.

In the exhaust gas purification catalyst 1B, the first catalyst layer 20 is provided upstream of the second catalyst layer 30. Thus, exhaust gas that has flowed in from the end (opening) on the exhaust gas inflow side of the cell 13a contacts with the first catalyst layer 20, then passes the porous partition wall 12, and contacts with the second catalyst layer 30. When the exhaust gas contacts with the first catalyst layer 20, phosphorus in the exhaust gas is captured by the Mg-Ba-Al-based complex oxide in the first catalyst layer 20. This prevents phosphorus from poisoning Pd or Pt contained in the second catalyst layer 30. Accordingly, the second catalyst layer 30 can exhibit improved exhaust gas purification performance of Pd or Pt.

In the Mg-Ba-Al-based complex oxide, Mg is prevented from deteriorating the exhaust gas purification performance of Rh due to a decrease in the Mg content. Therefore, the first catalyst layer 20 can exhibit improved exhaust gas purification performance of Rh. In addition, in the Mg-Ba-Al-based complex oxide, the phase splitting of the Mg-Ba-Al-based complex oxide (phase splitting into a spinel-type crystal phase and an α-alumina phase) that can be caused due to heat treatment (calcining) performed at the time of producing the Mg-Ba-Al-based complex oxide is prevented by the incorporation (preferably dissolution) of Ba. This prevents a decrease in the specific surface area of the Mg-Ba-Al-based complex oxide and a decrease in the phosphorus capturing capacity of the Mg-Ba-Al-based complex oxide due to the decrease in the specific surface area of the Mg-Ba-Al-based complex oxide. Therefore, the first catalyst layer 20 can exhibit improved phosphorus capturing performance. This prevents phosphorus from poisoning Pd or Pt contained in the second catalyst layer 30 effectively. Thus, the second catalyst layer 30 can exhibit improved exhaust gas purification performance of Pd or Pt.

The exhaust gas purification catalyst 1B can be produced by the following method. The end on the exhaust gas inflow side of the substrate 10 is immersed in slurry for forming the first catalyst layer 20, and the slurry is aspirated from the opposite side, followed by drying to form the precursor layer of the first catalyst layer 20. The end on the exhaust gas outflow side of the substrate 10 is immersed in slurry for forming the second catalyst layer 30, and the slurry is aspirated from the opposite side, followed by drying to form the precursor layer of the second catalyst layer 30. The precursor layer of the first catalyst layer 20 and the precursor layer of the second catalyst layer 30 are formed and then calcined. The first catalyst layer 20 and the second catalyst layer 30 are formed thereby to produce the exhaust gas purification catalyst 1B. The conditions for producing the exhaust gas purification catalyst 1B and the like are the same as the conditions for producing the exhaust gas purification catalyst 1A and the like.

### EXAMPLES

Hereinafter, the present invention will be further described in detail based on Examples and Comparative Examples.

### [Examples 1 to 4 and Comparative Examples 1 to 2]

### (1) Production of Mg-Ba-Al-based and Mg-Al-based complex oxide powders

In Examples 1 to 4, Mg-Ba-Al-based complex oxide powders were produced, and in Comparative Examples 1 to 2, Mg-AI-based complex oxide powders were produced.

A solution 1 was prepared by dissolving barium nitrate, magnesium nitrate, and aluminum nitrate in pure water so that the amounts of Ba, Mg, and Al in terms of oxides were set to the amounts (% by mass) shown in Table 1. In Comparative Example 1 and 2, barium nitrate was not used.

A solution 2 was prepared by dissolving in pure water, ammonium carbonate in an amount more excessive than an amount necessary for neutralizing the nitrate of the solution 1.

The solution 1 was poured into the solution 2 at a constant speed to produce a white precipitate by reverse neutralization. The obtained precipitate was filtered and washed with pure water. The obtained powder was dried at 120°C overnight, then pulverized to 100 mesh or less, and calcined at 1100°C in the air atmosphere for 4 hours to obtain Mg-Ba-Al-based and Mg-Al-based complex oxide powders. Table 1 shows the compositions of the Mg-Ba-Al-based and Mg-Al-based complex oxide powders.

<D50> The Mg-Ba-Al-based and Mg-Al-based complex oxide powders each had a D₅₀ of 7 µm. The D₅₀ was measured by: introducing each of the Mg-Ba-Al-based and Mg-Al-based complex oxide powders into an aqueous dispersion medium (for example, pure water), using an automatic sample feeder ("Microtorac SDC" manufactured by MicrotracBEL Corporation) for a laser diffraction scattering particle size distribution analyzer; and irradiating a 40-W ultrasonic wave for 360 seconds in a flow velocity of 26 mL/sec, followed by measurement using a laser diffraction scattering particle size distribution analyzer (manufactured by MicrotracBEL Corporation "Microtrac MT3300EXII"). The measurement of D₅₀ was carried out twice, under the conditions of particle refractive index: 1.5, particle shape: "true sphere", solvent refractive index: 1.3, "set-zero": 30 seconds, and measurement time: 30 seconds. Regarding each of the Mg-Ba-Al-based and Mg-Al-based complex oxide powders, the mean value of the measured values was defined as the D₅₀.

### <Specific surface area>

Table 1 shows the specific surface areas of the Mg-Ba-Al-based and Mg-Al-based complex oxide powders. The specific surface area was measured by the BET single point method using the specific surface area measuring apparatus QUADRASORB SI (manufactured by Anton Paar QuantaTec Inc.). Gas to be used in the measurement was nitrogen gas. The BET single point method was performed according to "(3.5) Single point method" in "6.2 Flow method" in JIS R1626 "Measuring methods for the specific surface area of fine ceramic powders by gas adsorption using the BET method".

### <Evaluation of presence or absence of phase splitting of Mg-Ba-Al-based and Mg-Al-based complex oxides>

The X-ray diffraction spectra of the Mg-Ba-Al-based and Mg-Al-based complex oxide powders were measured using an X-ray diffractometer (model number: MiniFlex600, manufactured by Rigaku Corporation) under the conditions of X-ray source: CuKα, operating axis: 2θ/θ, measuring method: continuous, counting unit: cps, start angle: 5°, end angle: 85°, sampling width: 0.02°, scanning speed: 7°/minute, voltage: 15 kV, and current: 100 mA. In the case where the intensity ratio "Ic/Is" of the peak intensity "Ic" which is derived from α-alumina phase present at a position of 2θ = 35.1 ± 0.1° to the peak intensity "Is" which is derived from the spinel-type crystal phase present at a position of 2θ = 37 ± 0.5° was 2 or less in a Mg-Ba-Al-based or Mg-Al-based complex oxide, it was estimated that the phase splitting of the Mg-Ba-Al-based or Mg-Al-based complex oxide did not occur. In the case where the intensity ratio Ic/Is exceeded 2 in a Mg-Ba-Al-based or Mg-Al-based complex oxide, it was estimated that the phase splitting of the Mg-Ba-Al-based or Mg-Al-based complex oxide occurred. Table 1 shows the results.

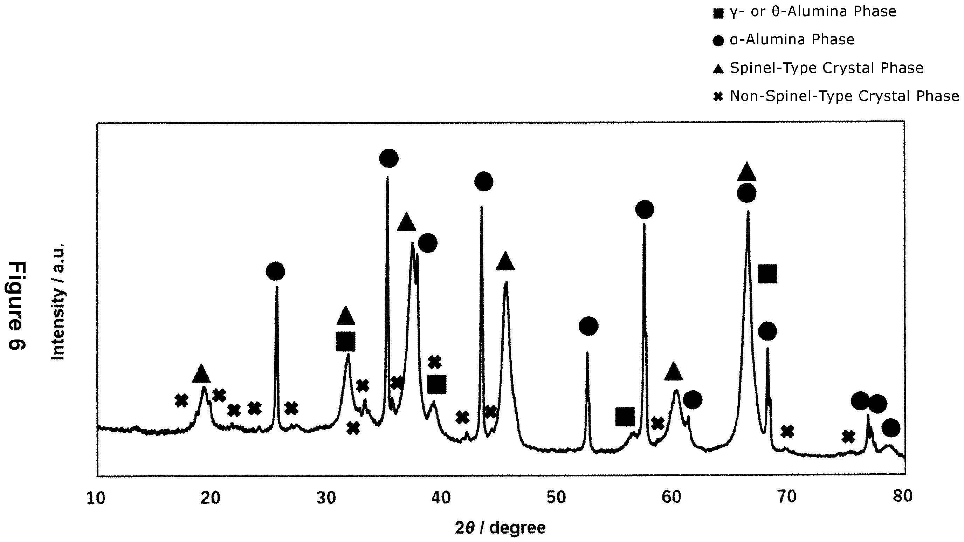

Figure 6 shows the X-ray diffraction pattern of the Mg-Ba-Al-based complex oxide powder of Example 3.

### (2) Production of first slurry

A first slurry was produced by adding an alumina powder, a Ce-Zr-based complex oxide powder, and the Mg-Ba-AI-based or Mg-Al-based complex oxide powder produced in the above-mentioned (1) to an aqueous rhodium nitrate solution and mixing them. The amounts of the components in the first slurry were adjusted so that the Rh amount, the alumina amount, the Ce-Zr-based complex oxide amount, and the Mg-Ba-AI-based or Mg-Al-based complex oxide amount were 2% by mass, 41% by mass, 41% by mass, and 16% by mass, respectively, based on the mass of the first catalyst layer formed by drying and calcining the first slurry.

### (3) Production of second slurry

A second slurry was produced by adding an alumina powder, and a Ce-Zr-based complex oxide powder to an aqueous palladium nitrate solution and mixing them. The amounts of the components in the second slurry were adjusted so that the Pd amount, the alumina amount, and the Ce-Zr-based complex oxide amount were 5% by mass, 48% by mass, and 47% by mass, respectively, based on the mass of the second catalyst layer formed by drying and calcining the second slurry.

### (4) Production of exhaust gas purification catalyst

A honeycomb substrate (material: cordierite, diameter: 118.4 mm, axial length: 91 mm, cell density: 600 cells/inch², volume: 1 L) was immersed in the second slurry and then dried at 70°C for 1 hour. After the drying, the honeycomb substrate was calcined at 450°C for 1 hour to form a second catalyst layer on the honeycomb substrate. The mass of the second catalyst layer per unit volume of the honeycomb substrate was 115 g/L. The mass of Pd in the second catalyst layer per unit volume of the honeycomb substrate was 5 g/L. The total mass of the alumina and the Ce-Zr-based complex oxide in the second catalyst layer per unit volume of the honeycomb substrate was 110 g/L.

Then, the honeycomb substrate in which the second catalyst layer was formed was immersed in the first slurry and then dried at 70°C for 1 hour. After the drying, the honeycomb substrate was calcined at 450°C for 1 hour to form a first catalyst layer on the second catalyst layer. The mass of the first catalyst layer per unit volume of the honeycomb substrate was 61 g/L. The mass of Rh in the first catalyst layer per unit volume of the honeycomb substrate was 1 g/L. The total mass of the alumina and the Ce-Zr-based complex oxide in the first catalyst layer per unit volume of the honeycomb substrate was 50 g/L. The mass of the Mg-Ba-Al-based or Mg-Al-based complex oxide in the first catalyst layer per unit volume of the honeycomb substrate was 10 g/L.

### (5) Thermal aging test

The exhaust gas purification catalyst produced in the above-mentioned (4) was subjected to coring to 15 mL and subjected to a thermal aging test under the conditions of 1000°C × 25 hours in an atmosphere containing a 10% by volume H₂O in the following FC mode.
FC mode: The model gas having the following composition at 3 L/min and air at 3 L/min were made to flow alternately every predetermined time.
Model gas flow rate: C₃H₆ 6 mL/min, O₂ 71 mL/min, and N₂ 2923 mL/min (3 L/min in total).

10% by volume H₂O: Water was vaporized from a tank containing water and incorporated as water vapor into the model gas or air. The saturated water vapor pressure was adjusted to a water vapor amount of the above-mentioned % by volume by regulating the temperature.

### (6) Exhaust gas purification performance test (phosphorus poisoning endurance test)

The exhaust gas purification catalyst after the thermal aging test in the above-mentioned (5) was fixed in a predetermined jig, and an exhaust pipe was equipped with the jig. A thermocouple was inserted at the center of the honeycomb. This exhaust pipe was set to an engine, and the engine speed/torque and the like were adjusted so that the temperature of the thermocouple was 750°C ± 20°C. At this time, the test was conducted as a cycle test in which the A/F (air/fuel) was repeated to be 14 and 15 each at regular intervals. Engine oil was added upstream of the catalyst at 6 mL/hour to promote the phosphorus poisoning. The endurance test time was to be 150 hours.

### (7) Evaluation of light-off temperature T50

After the phosphorus poisoning endurance test, an evaluating apparatus was filled with the exhaust gas purification catalyst. While exhaust model gas (CO: 0.50%, H₂: 0.17%, O₂: 0.50%, NO: 500 ppm, C₃H₆: 1200 ppm, CO₂: 14%, H₂O: 10%, and N₂: balance) was allowed to flow through at a space velocity of 100000/h, the purification rate of the hydrocarbon (THC) was continuously measured with the temperature increase at an increasing temperature of 20°C/minute to 500°C. Temperature at which the purification rate of the hydrocarbon (THC) reached 50% (light-off temperature T50) (°C) was determined. The light-off temperature T50 was determined while the temperature was rising. Table 1 shows the results.

**[Table 1]**

| | Mg-Ba-AI-based or Mg-Al-based complex oxide | | | | | | | | | Catalytic performance in phosphorus poisoning endurance test |
|---|---|---|---|---|---|---|---|---|---|---|
| | Composition (% by mass) | | | Elemental ratio (molar ratio) | | | Intensity ratio Ic/Is | Presence or absence of phase splitting | Specific surface area (m²/g) | T50 of THC (°C) |
| | MgO | BaO | Al₂O₃ | Mg/AI | Ba/AI | Ba/Mg | | | | |
| Example 1 | 5 | is | 80 | 0.08 | 0.06 | 0.79 | 1.50 | Absence | 50 | 275 |
| Example 2 | 5 | 10 | 85 | 0.07 | 0.04 | 0.53 | 1.57 | Absence | 75 | 270 |
| Example 3 | 5 | 5 | 90 | 0.07 | 0.02 | 0.26 | 1.40 | Absence | 70 | 265 |
| Example 4 | 5 | 3 | 92 | 0.07 | 0.01 | 0.16 | 1.56 | Absence | 65 | 275 |
| Comparative Example 1 | 5 | - | 95 | 0.07 | - | - | 5.19 | Presence | 40 | 280 |
| Comparative Example 2 | 15 | - | 85 | 0.22 | - | - | 4.50 | Presence | 30 | 295 |

As shown in Table 1, the phase splitting into the spinel-type crystal phase did not occur in the Mg-Ba-Al-based complex oxide powders of Examples 1 to 4, but occurred in the Mg-Al-based complex oxide powders of Comparative Examples 1 to 2.

As shown in Table 1, the specific surface areas of the Mg-Ba-Al-based complex oxide powders of Examples 1 to 4 were significantly larger than those of the Mg-Al-based complex oxide powders of Comparative Examples 1 to 2.

As shown in Table 1, the light-off temperatures T50 after the phosphorus poisoning endurance test of the catalysts using the Mg-Ba-Al-based complex oxide powders of Examples 1 to 4 were significantly lower than those of the catalysts using the Mg-Al-based complex oxide powders of Comparative Examples 1 to 2.

## Claims

1. An exhaust gas purification catalyst composition, comprising Rh and a complex oxide comprising Mg, Ba, and Al,
wherein the complex oxide has a spinel-type crystal structure, and
wherein a molar ratio of a Mg content to an Al content in the complex oxide is 0.010 or more and 0.25 or less.

2. The exhaust gas purification catalyst composition according to claim 1, wherein a molar ratio of a Ba content to the Al content in the complex oxide is 0.0010 or more and 0.10 or less.

3. The exhaust gas purification catalyst composition according to claim 1 or 2, wherein a molar ratio of a Ba content to the Mg content in the complex oxide is 0.010 or more and 1.0 or less.

4. The exhaust gas purification catalyst composition according to any one of claims 1 to 3, wherein the exhaust gas purification catalyst composition comprises an inorganic oxide other than the complex oxide in an amount more than an amount of the complex oxide.

5. An exhaust gas purification catalyst, comprising a substrate and a first catalyst layer provided on the substrate,
wherein the first catalyst layer comprises Rh and a complex oxide comprising Mg, Ba and Al,
wherein the complex oxide has a spinel-type crystal structure, and
wherein a molar ratio of a Mg content to an Al content in the complex oxide is 0.010 or more and 0.25 or less.

6. The exhaust gas purification catalyst according to claim 5,
wherein the exhaust gas purification catalyst further comprises a second catalyst layer provided on the substrate,
wherein the second catalyst layer comprises Pd or Pt, and
wherein the first catalyst layer is provided on an upside or upstream of the second catalyst layer.

7. The exhaust gas purification catalyst according to claim 5 or 6, wherein a molar ratio of a Ba content to the Al content in the complex oxide is 0.0010 or more and 0.10 or less.

8. The exhaust gas purification catalyst according to any one of claims 5 to 7, wherein a molar ratio of a Ba content to the Mg content in the complex oxide is 0.010 or more and 1.0 or less.

9. The exhaust gas purification catalyst according to any one of claims 5 to 8, wherein the first catalyst layer comprises an inorganic oxide other than the complex oxide in an amount more than an amount of the complex oxide.
